# EUROPEAN PATENT APPLICATION

(11) **EP 1 600 407 A1**
(43) Date of publication of application: **30.11.2005**
(21) Application number: 00122054.0
(22) Date of filing: 11.10.2000
(51) Int. Cl.: B65G 49/06

(54) **Automatic or semiautomatic machine for translation of sheets of glass or different materials from one processing line to another processing line, the two lines having between them a finite angle**

(71) Applicant: FOR.EL. BASE di VIANELLO FORTUNATO & C. S.n.c., 31056 Vallio di Roncade (Treviso) (IT)
(72) Inventor: Vianello, Fortunato, 31056 Vallio di Roncade (IT); Moschini, Dino, 31050 San Cipriano (IT)

(57) **Abstract**

The following application has for object an automatic or semiautomatic machine suitable for transfer in a proper, economic and safe way glass sheets or insulating glass panes, or sheets or panes of similar materials or of different materials, from one processing line to another processing line, the two lines having between them a finite angle. The same machine is not limited to this specific case, but is utilisable in all those cases where a sheet of glass or of materials different from glass has to be transferred from one machine to another for processing or from a storage to another for the stocking.

## Description

### STATE OF THE ART AND RELATIVE PROBLEMS

Today it' s known to carry out the processing of the glass sheet in general and of the insulating glass in particular in lines having vertical layout, or better a little sloped towards the vertical so that the glass has consequently vertical layout or better a little sloped towards the vertical so that to minimise the space occupied for the process. Such a system, even if rational from the point of view of the occupied space, in reality, once compared with the systems with horizontal layout where the motion can be carried out along any direction and typically along the two main orthogonal directions, needs the availability of factories having considerable length as the multiple processes need a lot of machines and all these machines are put consecutively on line one after the other.

For better understanding of the configuration and of the extension of a line processing the insulating glass herewith some concepts regarding both the product i.e. the "insulating glass" and the processes for its fabrication are summarised.

The "insulating glass" is constituted by the combination of two or more glasses separated by one or more hollow spacer frames with microholes on the inside surface, these spacer frames containing in their hollow part hygroscopic material and the chamber (or chambers) contained between glasses and frames containing air or gas or gas mix to give to the "insulating glass" particular properties, for example suitable for thermal insulation or acoustic insulation. The joining between glasses and frames is obtained by means of two levels of sealing, the first with function of tightness, the second with function of obtaining cohesion and mechanical strength.

As per above simple synthesis it' s evident that a line for "insulating glass" processing needs a lot of subsequent processes and that if these processes are required to be carried out in an automatic way, the transferring from one machine to the following machine included, the development of the length of the processing line is very expanded and so, in a lot of cases incompatible with the available space of the factories.

The processes for the "insulating glass" production, each one needing a relative and particular machine to be laid as a series towards those complementary, are, as non exhaustive example, the following:
REMOVING of the peripheral margin from eventual coating of the glass to allow the adhesion of the sealant
WASHING of the single glasses, by alternation inside glass / outside glass
QUALITY CONTROL automatic electronic or semiautomatic visual
SPACER FRAME APPLICATION (the spacer frame is manufactured, filled with hygroscopic material and spread on the lateral faces with adhesive sealant, in machines external to the "insulating glass" line production)
COUPLING AND PRESSING of the group glasses / spacer frames
FILLING WITH GAS of the so obtained chamber
PADS APPLICATION (packing components)

### SECOND SEALING

Moreover we have to consider the possibility that, before the above described insulating glass production line, also the process of cut of the single glasses is carried out on a line with vertical, or a little sloped towards the vertical, layout, and that therefore can be put as extension of the "insulating glass" production line. With better reason the length increase of the sum of the two lines becomes incompatible with the normal length of the factories.

The length encumbrance doesn't mean the only inconvenience to request factories much developed in length, but presents also the problem of the dispersion of the manpower's layout as the distance between the various working stations is developing in a progressive way and therefore a workman put and partially operating for example at the washing machine, should operate for example at the coupling machine with difficulty due to the frequency of the interventions and the distance between the machines. Also from this point of view, if the listed machines are opposite side, the situation should be more favourable.

The research of the state of the art, filed in pertinent or similar sectors, has find the only following anterior patent: EP 0 857 849.

The pertinent part of such invention refers to a device which carries out, along an "insulating glass" line production, the rotation by 180° of the glass in such a way to invert the faces of the same glass for the following processes, but keeping the consecutive alignment of all the machines in such a way to form a line developing only along the length. Such invention therefore do not teaches anything about the possibility and the inventive steps to change the orientation of the machines of the line and much less get the target using a device with a length encumbrance inferior to that of the glass sheets to be transported. Main target of the object of the present application is therefore that to solve the listed technical problems avoiding the inconvenience of the known technique and therefore thinking a procedure and a machine that allow to carry out, in an automatic or semiautomatic way the functional, economic and safe transferring of sheets of glass or similar material or different material, from a processing line to another processing line forming between them an angle different from zero degrees. Moreover the relative machine can transfer sheets of glass or similar material or different material with extension wider than the length of the same machine.

### DESCRIPTION OF THE INVENTION

To better understand the philosophy of the present invention, the types of the product to be processed and the sequence of processing have already been described.

We will see now how, with the machine object of the present application, the transferring of glass sheets or insulating glass panes, or sheets or panes of similar materials or of different materials, from one processing line to another processing line, the two lines having between them a finite angle, is solved.

Typically the processing lines, or part of the processing lines unaligned, need to be laid at right (90°) angle in such a way to follow the industrial buildings main geometry. Simply combining two following deviations, each one of 90°, the beginning and the end of the machines progression (machines constituting the global line) became parallel and opposed, and therefore not only with the result of optimising the occupied spaces but also of unify the workplaces, for example the loading of the washing machine and the unloading of the automatic sealing machine.

To obtain the transferring of the glass sheet or insulating glass pane from one processing line or part of a processing line to another processing line or to another part of processing line, the two lines not being aligned but having between them a finite angle a "conveyor" is logically necessary; such conveyor being constituted by a sliding plane with idle wheels or with air cushions having vertical layout, or better a little inclined towards the vertical plane, together with a motorised rollers translator. Such conveyor has to carry out an angle excursion equal to the angle displacement of the lines or part of lines, around a pivot adequately placed in such a way that the conveyor inlet is in coincidence and constitutes the prolongation of the line or part of the origin line when receiving the glass or the "insulating glass" from the origin line or part of the origin line and that the conveyor outlet is in coincidence and constitutes the prolongation of the destination line or part of the destination line when transferring the glass or the "insulating glass" to the destination line or part of the destination line. According to such a concept with content perhaps already known and concept perhaps already used or anyhow in the range of, if not of the expert of the field of the glass manipulation, of the expert of the transportation in general, the "conveyor" must have dimensions able to hold the glass or the "insulating glass" in its totality.

Object of the present invention is instead that of being successful to transfer glasses or "insulating glasses" having length development bigger than that of the "conveyor". This is obtained combining the sequence of the motions of translation of the glass or of the "insulating glass" along the conveyor with the sequence of the motions of rotation of the same conveyor, locating the rotating axis in such a way to obtain the machine terminals perfectly conjugate respectively with the exit of the origin machine and with the entrance of the destination machine, combining the speed of the mechanisms in such a way to eliminate or at least to reduce the gyroscopic phenomena.

### WAYS FOR THE EXECUTION OF THE INVENTION

To better describe a way of execution of the invention, hereafter the figures about one of the essential configuration are commented, hinting to possible alternative configurations which will be better defined in the claims, scanning the phases of a possible working cycle with the same progression of the figures.

FIGURES 0A and 0B show the machine, on its essential components and with the two main views. Said essential components are: [1] base; [2] rotating frame; [3] mechanisms for the rotation of the rotating frame; [4] motorised rollers translator; [5] sliding plane with idle wheels; [6] electric-electronic box for command and control; [7] protection structures; the glass in transit is represented with number [8]
FIGURE 1 shows the machine in the phase of alignment with the previous machine (origin) and of stand-by waiting for the glass receiving
FIGURE 2 shows the machine in the phase of transit of the glass from the origin machine to the transferring machine
FIGURE 3 shows the machine in the phase of end transit of the glass from the origin machine to the transferring machine
FIGURE 4 shows the machine in the phase of beginning of the rotation of the same
FIGURE 5 shows the machine in the phase of intermediate rotation of the same and of backward intermediate displacement of the glass
FIGURE 6 shows the machine in the phase of completion of the rotation and of end back displacement of the glass
FIGURE 7 shows the machine in the phase of end rotation of the same and of alignment with the following machine (destination) and of stand-by waiting for the expulsion of the glass
FIGURE 8 shows the machine in the phase of alignment with the following machine (destination) and of starting of expulsion of the glass from the transferring machine to the destination machine
FIGURE 9 shows the machine in the phase of alignment with the following machine (destination) and of end expulsion of the glass from the transferring machine to the destination machine

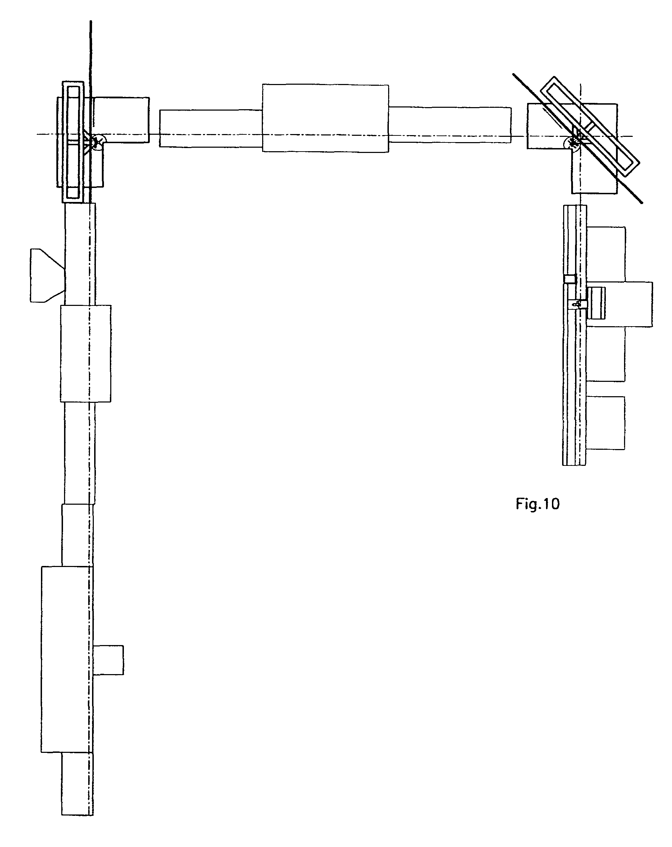

FIGURE 10 shows a possible solution of use of two transferring machines in cascade to obtain an U-shape inversion of the producing process

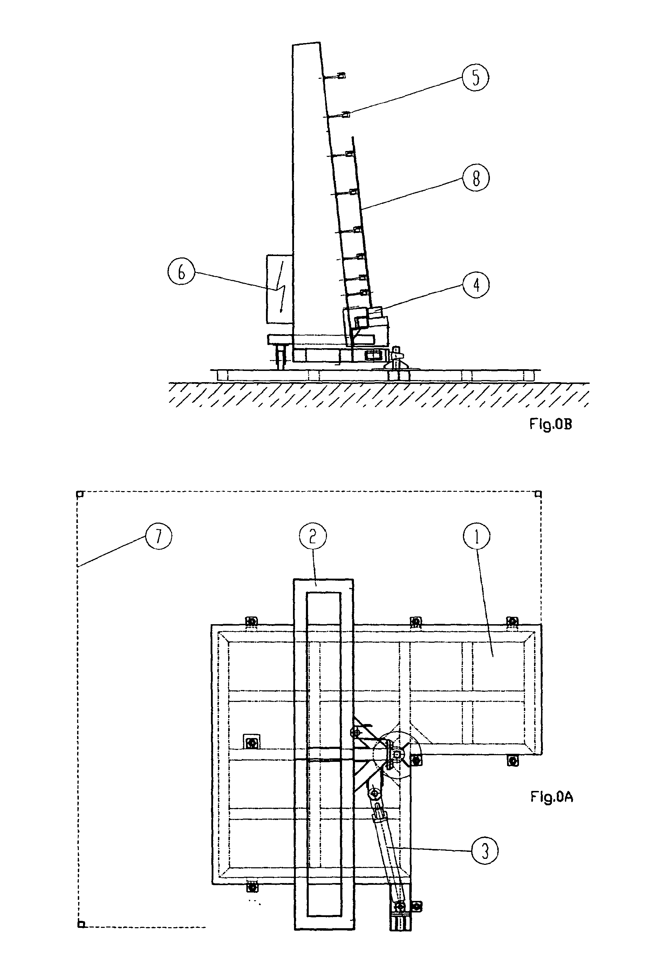

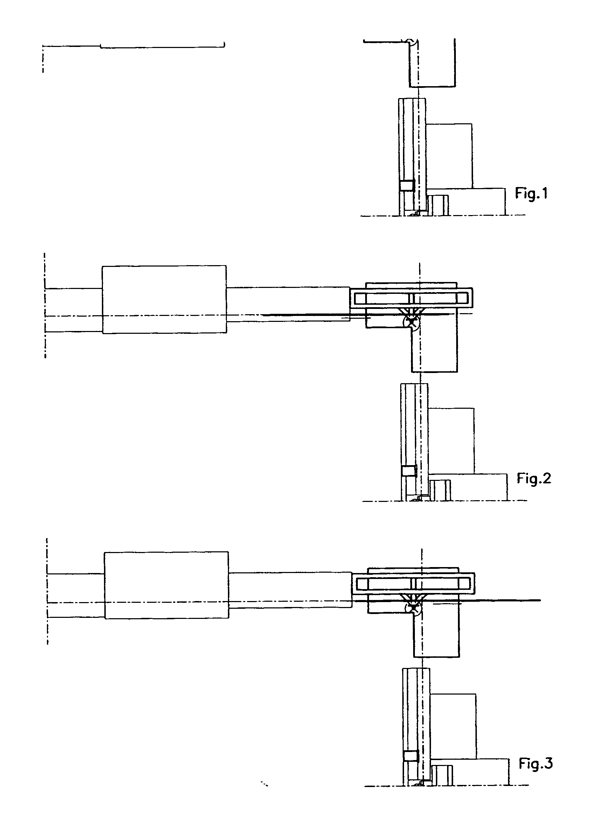

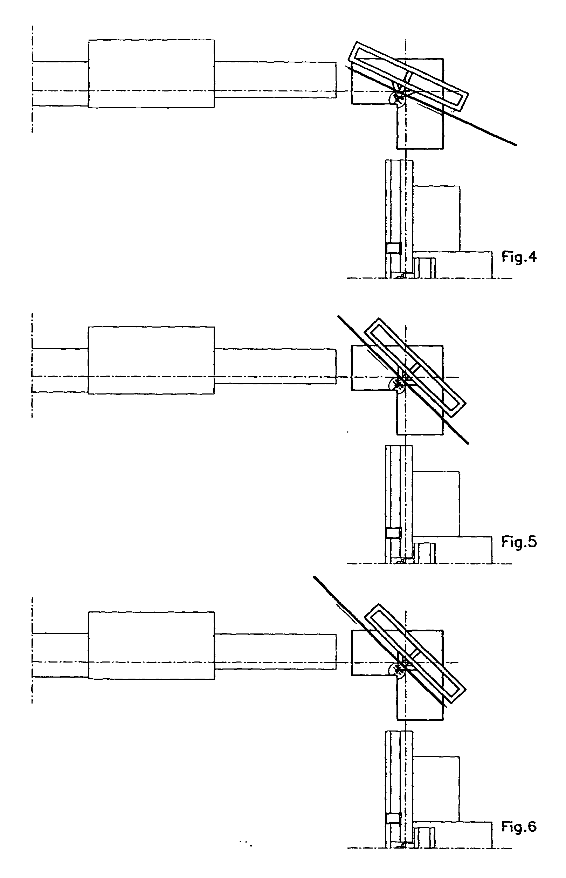

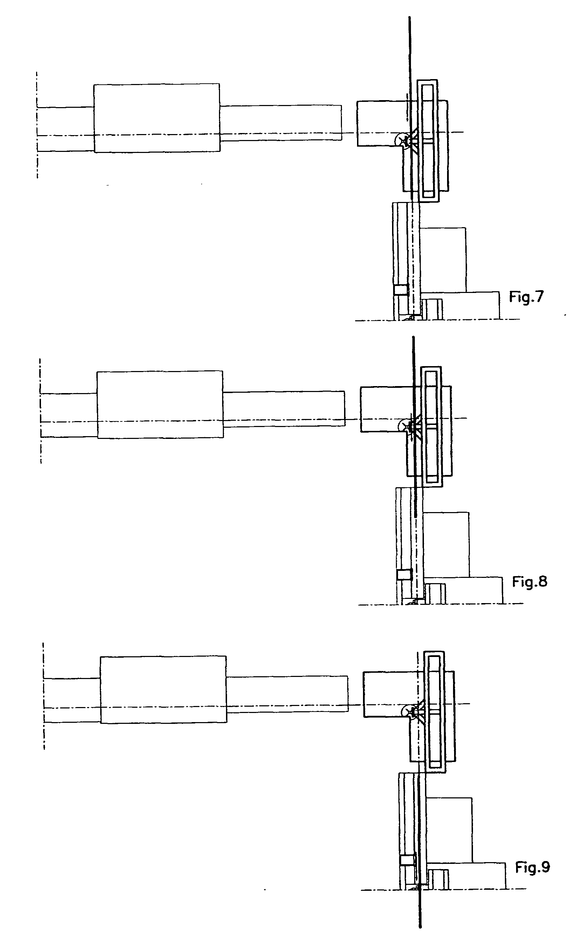

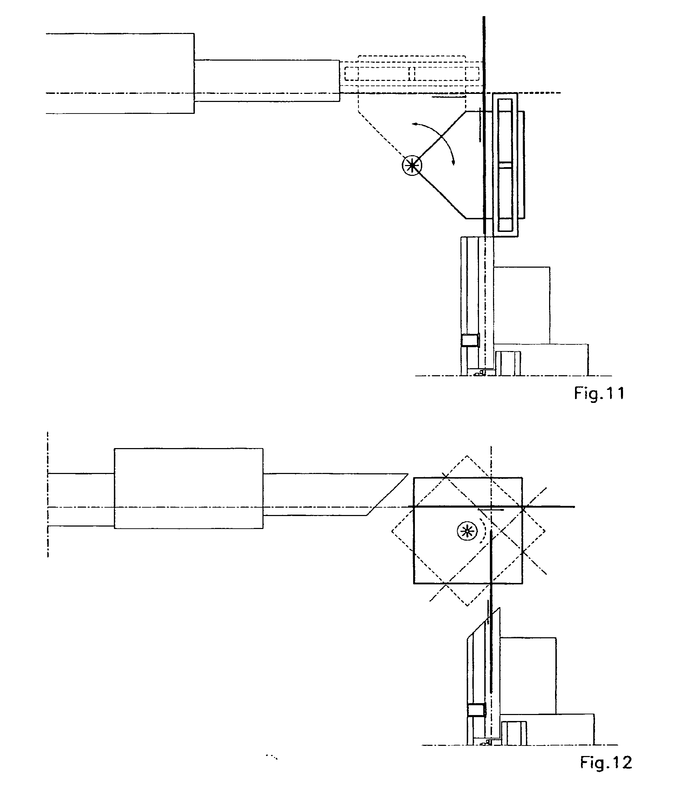

FIGURES 11, 12 show an example series, but not exhaustive, of possible alternative configurations of the transferring machine, with evident extension to similar principles but obtaining the same scope; for example the figure 11 represents a change of the machine described in detail in the figures 1 to 9 which allows a minor standout of the sheet towards the posterior part of the line during the back transferring phase; as further example the figure 12 represents a solution of transferring machine, with revolving motion no more oscillating forward-backward but even if intermittent but always in the same versus, what allows to the transferring machine also accumulation functions (in the figure a possibility of contemporary restraining of two glasses is shown).

NOTE: due to reasons of concentration and example at the same time, during the different descriptions the components destined to the processing have been mentioned alternatively as: glass, glass sheet, insulating glass, insulating glass pane, sheets of glass or similar material or different material etc. No need to say that all such types of material can be stocked, selected transferred and distributed with the machine and the procedure object of the present invention and which are all claimed.

The various components of the machine can be activated with different sequences, for example simultaneous glass translation of the glass and rotation of the machine when the glass does not interfere with the machines origin and destination, simply interacting with the software program, which is extremely flexible.

Naturally all the movements linked to the phases of the cycle are interlaced between them, by using a parallel always active link logic, to avoid conditions of interference of the glass with parts of the machines and to avoid gyroscopic phenomena. At the same time such logic controls the interface and the synchronism with preceding process machine (elsewhere said "origin") and with following process machine (elsewhere said "destination"). The present invention is susceptible of various options, all comprised in the inventive concept, as for example the amount of the angular travel, the adapting to the dimension and to the type of the sheet, the driving means which can be electric, electric-electronic, pneumatic, hydraulic and/or combined, the control means which can be electronic or fluidic and/or combined, etc.

The manufacturing details can be substituted with others technically equivalent. The materials and the dimensions can be in a large range according to the exigencies, particularly connected with the type and dimensions of the sheets.

Moreover the field of use can be referred not only to the sector of the sheets of glass or of the panes of insulating glass but also to any sector where the problem to be solved is that of varying the plane of laying of sheets (i.e. objects having two dimensions with size much higher than the third one) to allow the transit from one processing machine to a following one unaligned with the same angle or from a storage to another unaligned with the same angle, using a machine which engages an encumbrance in length less than that of the sheet.

As no state of the art has been found neither for machines or devices that carry out the angle deviation of a sheet of glass having longitudinal encumbrance inferior to that of the machine or of the device, the invention object of the present application, even if with a minor inventive step may include a machine or a device to deviate the orientation of a sheet of glass having encumbrance inferior to that of the machine or of the device. In this situation the mechanism needs not a motion type "pilgrim step" and so it results more simple, anyhow still with an inventive step as not belonging to the state of the art.

## Claims

1. Automatic or semiautomatic machine for the transferring of sheets of glass [8] or of insulating glass panes, or sheets or panes of similar materials or of different materials, from one processing line (origin) to another processing line (destination), the two lines having vertical arrangement or a little inclined towards the vertical arrangement, the two lines having between them a finite angle **characterized by the fact that** the sheet [8], having length superior to that of the machine, is put with projection, for the longer part, on the exit end of the machine in such a way to not interfere with the origin line and that during the rotating motion of the machine the same sheet [8] translates backward in such a way to not interfere, during the final rotation phase, with the destination line.

2. machine as per claim 1 **characterized by the fact that** the pivoting axis is put fore to the front of the machine in such a way that the rotation of the same does not cause interference between the same transferring machine and the origin processing line or the destination processing line.

3. machine as per claim 1 **characterized by the fact that** the backward translation motion of the sheet [8] can be carried out contemporarily with the rotating motion of the transferring machine or in phases when the transferring machine does not rotate.

4. machine as per claim 1 **characterized by the fact that** the rotating speed of the transferring machine and the translation speed of the sheet [8] are combined and limited so that to limit the gyroscopic effects.

5. machine as per claim 1 **characterized by the fact that** when the length of the sheet [8] under process does not exceed the length of the transferring machine the backward motion of the same sheet [8] is not carried out or anyhow is not necessary.

6. machine as per one or more of the previous claims **characterized by the fact that** the sequence of the cycle phases can have an order different from that represented in the figures, as well as a reduction or an extension of the quantity of the same phases, to optimise the process cycle in function of the kind of the same sheets.

7. machine as per one or more of the previous claims **characterized by the fact that** the same can be used other than in the single version also in progressive multiple version, to allow successive deviations of the process lines, for example to get an U-shape inversion of the process line.

8. machine as per one or more of the previous claims **characterized by the fact that** the motions of the mechanisms of the same machine can be actuated with electric, electric-electronic, pneumatic, hydraulic or combined means and that the control systems can be obtained with electronic, fluidic or combined means

9. Automatic or semiautomatic procedure for the transferring of sheets of glass [8] or of insulating glass panes, or sheets or panes of similar materials or of different materials, from one processing line (origin) to another processing line (destination), the two lines having vertical arrangement or a little inclined towards the vertical arrangement, the two lines having between them a finite angle **characterized by the fact that** the sheet [8], having length superior to that of the machine, is put with projection, for the longer part, on the exit end of the machine in such a way to not interfere with the origin line and that during the rotating motion of the machine the same sheet [8] translates backward in such a way to not interfere, during the final rotation phase, with the destination line.

10. Automatic or semiautomatic procedure as per claim 9 **characterized by the fact that** the backward translation motion of the sheet [8] can be carried out contemporarily with the rotating motion of the transferring machine or in phases when the transferring machine does not rotate.

11. Automatic or semiautomatic procedure as per claim 9 **characterized by the fact that** when the length of the sheet [8] under process does not exceed the length of the transferring machine the backward motion of the same sheet [8] is not carried out or anyhow is not necessary.

12. Automatic or semiautomatic machine for the transferring of sheets of glass [8] or of insulating glass panes, or sheets or panes of similar materials or of different materials, from one processing line (origin) to another processing line (destination), the two lines having vertical arrangement or a little inclined towards the vertical arrangement, the two lines having between them a finite angle as per one or more of the previous claims **characterized by the fact that** "pilgrim step" type motions are not necessary as the sheet has longitudinal dimension inferior to that of the machine, that anyhow is made and operates according to what indicated in the figures.

13. Automatic or semiautomatic procedure for the transferring of sheets of glass [8] or of insulating glass panes, or sheets or panes of similar materials or of different materials, from one processing line (origin) to another processing line (destination), the two lines having vertical arrangement or a little inclined towards the vertical arrangement, the two lines having between them a finite angle as per one or more of the previous claims **characterized by the fact that** "pilgrim step" type motions are not necessary as the sheet has longitudinal dimension inferior to that of the machine, that anyhow is made and operates according to what indicated in the figures.

14. Machine and procedure as per one or more of the previous claims **characterised** **for what** described and illustrated in the attached drawings, particularly with reference to the "revolver" configuration of the figure 12.
